# EUROPEAN PATENT APPLICATION

(11) **EP 1 859 838 A1**
(43) Date of publication of application: **28.11.2007**
(21) Application number: 06114344.2
(22) Date of filing: 22.05.2006
(51) Int. Cl.: A63B 53/10, A63B 53/12, A63B 53/02

(54) **Golf shaft having a multiple tube structure**

(71) Applicant: Prince Sports, Inc., Bordentown NJ 08505 (US)
(72) Inventor: Davis, Stephen J., Newtown, PA 18940 (US); Gazzara, Roberto, 30171 Mestre (VE) (IT); Pinaffo, Mauro, 35012 Camposampiero (PD) (IT); Pezzato, Mauro, 31100 Treviso (IT); Pozzobon, Michele, 31050 Fossalonga di Vedelago (TV) (IT)
(74) Representative: Zanoli, Enrico

(57) **Abstract**

A structure for a golf shaft system is described by using multiple composite tubes bonded to one another, wherein apertures, or "ports," are molded between the tubes to improve the stiffness, strength, and comfort of the golf shaft.

## Description

### BACKGROUND OF THE INVENTION

The present invention relates to a composite structure for a golf shaft, and more particularly, where the structure is generally tubular and the traditional single tube is replaced with multiple continuous tubes, preferably a pair of tubes fused together along their facing surfaces to provide an internal reinforcing wall as well as apertures, or "ports," between the tubes to provide specific performance advantages.

In particular, the basis of the design is to replace a single tube portion with a multiple, e.g., double tube design while maintaining the same or similar geometric exterior shape of the original single circular tube design. This provides a structure with an internal wall between the tubes which has strength and stiffness advantages. In addition, the tubes can be separated at various locations to form apertures or ports between the tubes which act as opposing arches which provide additional stiffness, strength, and comfort benefits.

The performance of a golf shaft is determined by a number of factors such as weight, bending flex, bending flex distribution, torsional stiffness, strength, and shock absorption. The traditional golf shaft is a single tubular structure with a tapered circular cross section and a hollow interior. The wall thickness can vary along its length to provide specific performance needs. The golf shaft may be made from a number of materials such as aluminum, steel, titanium, and light weight composite materials.

The weight of a golf shaft is a critical feature in determining performance. The lighter the shaft weight, the easier it is to swing the golf club resulting in higher head velocities. Therefore, the lightest materials and designs are used to achieve these performance goals. The most popular high performance material for modern golf shaft design is carbon fiber reinforced epoxy resin (CFE) because it has the highest strength and stiffness to weight ratio of any realistically affordable material. As a result, CFE can produce a very light weight golf shaft with excellent strength as well as providing a variety of stiffnesses.

The stiffness and stiffness distribution of a golf shaft are also important factors in determining the performance of a golf shaft. The bending stiffness of the golf shaft in the plane of the swing needs to match the forces created by the acceleration imposed by the golfer's swing in order to have the proper recovery to deliver the golf club head at the proper timing.

The bending stiffness of the golf shaft out of plane, i.e. perpendicular to the direction of travel of the golf club head is also important in determining the vertical position and orientation of the golf club head at the impact zone. Finally, the torsional stiffness of the golf shaft is important in determining the degree of rotation of the golf club head as a result of off center hits.

Carbon fiber composites offer very high stiffness to weight ratios, and because of their anisotropic properties offered, can be tailored to provide different stiffnesses in different directions and locations along the length of the golf shaft. However, there are limitations based on the traditional design of the single tube golf shaft.

There are further limitations on carbon fiber based materials used for golf shaft structures when considering strength requirements. A golf shaft made from carbon fiber composite can be susceptible to catastrophic failure resulting from excessive compressive forces which cause buckling of the thin walled tubes. A golf shaft is subjected to a multitude of stress conditions. There are bending loads in a multitude of directions. There are torsional loads induced by off center hits. There are impact loads and vibrational loads.

Furthermore, there are high stress concentrations where the shaft connects to the golf club head. This is a common failure location due to the high stress concentration imposed by the rigid golf club head attached to the flexible shaft. For this reason, the wall thickness of the shaft is the greatest in this area. As a result, the shaft can be heavier than desired. In addition, the effect of this extra mass on the swing weight of the club is greater than any other location on the shaft, since it is the furthest from the point of rotation of the swing.

Another desirable feature in a golf shaft is comfort. Striking the golf ball off the center region or "sweet spot" of the golf club head can be a painful experience due to the resulting torque and vibrations transmitted to the hands. Furthermore, striking the golf club head on the hard ground can produce uncomfortable shock waves to the hands and arms. Included is a shock wave that travels directly up the axis of the shaft. All types of shock and vibration are magnified with shafts of a lighter weight, which don't have the sufficient mass or inertia to absorb the shock or damp the vibrations.

The evolution of the modern golf shaft over the past twenty years has focused on improving light weight, stiffness, torsional stiffness, strength, and comfort. However, there has not been a golf shaft that has all of the mentioned performance benefits.

A lighter weight shaft is easier to swing, and there have been numerous golf shaft designs which have achieved lighter weight such as U.S. Pat. No. 5,695,408 to DeLaCruz et.al., which describes a golf shaft with a larger diameter grip portion end to reduce the weight of the grip and therefore reduce the overall weight of the golf club.

Increasing the torsional stiffness of a golf shaft is desirable because off center hits rebound with a smaller dispersion angle. U.S. Pat. No. 6,692,377 to Galloway describes a metal foil spiral wrapped along the length of the shaft to reduce torsional deflections. The metal foil, being a higher density than the carbon fiber/epoxy, would increase the weight of the shaft. Other companies have improved torsional stiffness by using higher modulus materials, or simply increasing the diameter of the shaft. Both of these options result in a shaft with less desirable bending stiffness.

Strength of the shaft is also important in high stress areas such as regions of high bending deflections or where the shaft connects to the golf club head. One method to increase strength is to build up the wall thickness of the shaft. Another method as described in U.S. Pat. No. 6,860,821 to Unosawa and Someno is to use a high strength metal wire layer within the composite laminate to increase strength. The metal wire, being a higher density, would increase the weight of the shaft.

Comfort is another important characteristic of a golf shaft. The ability of a golf shaft to absorb shock and damp vibrations is a desirable feature. Replacing the traditional epoxy thermoset resin used in carbon fiber reinforced composite materials with a viscoelastic thermoplastic resin, as shown in U.S. Pat. No. 6,261,500 to Park, et.al., produces a shaft with improved vibration damping. However, thermoplastic based composites have lower compression strength than thermoset based composites, and are susceptible to moisture absorption which reduces strength.

There are no designs using multiple tubes for performance benefits. This is because the traditional method of producing golf shafts requires rolling of the material around a solid internal mandrel and applying consolidation pressure from the exterior. The process cannot produce a multiple tube design.

Finally, there are no designs using holes for performance benefits. This is primarily because holes weaken the structure considerably because reinforcing fibers are severed when producing the holes. One previous design uses holes in the grip end of the shaft to provide gripping means as shown in U.S. Pat. No. 5,897,440 to Bae, et. al. Each hole is drilled which weakens the structure. Into each hole is placed an elastomeric insert with an external portion to provide a gripping means in a light weight design.

There exists a continuing need for an improved golf shaft that has the combined features of light weight, improved bending stiffness, improved torsional stiffness, improved strength, and improved comfort. In this regard, the present invention substantially fulfills this need.

### SUMMARY OF THE INVENTION

The present invention comprises a golf club shaft made with multiple tubes which are fused together along much of their lengths. The tubes preferably are separated from one another at selected locations to form apertures that act as double opposing arches, providing improved means of adjusting stiffness, resiliency, strength, and comfort.

The present invention is designed to provide a combination of light weight, tailored stiffness, greater strength, greater comfort, and improved aesthetics over the current prior art.

The golf shaft according to the present invention substantially departs from the conventional concepts and designs of the prior art and in doing so provides an apparatus primarily developed for the purpose of maintaining light weight while providing tailored stiffness, greater strength, greater comfort, as well as improved appearance.

In view of the foregoing commonality inherent in golf shafts of known designs and configurations now present in the prior art, the present invention provides an improved golf shaft system.

There has thus been outlined, rather broadly, the more important features of the invention in order that the detailed description thereof that follows may be better understood and in order that the present contribution to the art may be better appreciated. There are, of course, additional features of the invention that will be described hereinafter and which will form the subject matter of the claims attached.

In this respect, before explaining at least one embodiment of the invention in detail, it is to be understood that the invention is not limited in its application to the details of construction and to the arrangements of the components set forth in the following description or illustrated in the drawings. The invention is capable of other embodiments and of being practiced and carried out in various ways. Also, it is to be understood that the phraseology and terminology employed herein are for the purpose of descriptions and should not be regarded as limiting.

As such, those skilled in the art will appreciate that the conception, upon which this disclosure is based, may readily be utilized as a basis for the designing of other structures, methods and systems for carrying out the several purposes of the present invention. It is important, therefore, that the claims be regarded as including such equivalent constructions insofar as they do not depart from the spirit and scope of the present invention.

The present invention provides a new and improved golf shaft system which may be easily and efficiently manufactured.

The present invention provides a new and improved golf shaft system which is of durable and reliable construction.

The present invention provides a new and improved golf shaft system which may be manufactured at low cost with regard to both materials and labor

The present invention provides a golf shaft system that can provide specific stiffness zones at various orientations and locations along the length of the shaft.

The present invention provides a golf shaft system that improves the torsional stiffness of the shaft.

The present invention provides an improved golf shaft system that has superior strength and fatigue resistance.

The present invention provides an improved golf shaft system that has improved shock absorption and vibration damping characteristics.

The present invention provides an improved golf shaft system that has a unique look and improved aesthetics.

For a better understanding of the invention and its advantages, reference should be made to the accompanying drawings and descriptive matter in which there are illustrated preferred embodiments of the invention.

### BRIEF DESCRIPTION OF THE DRAWINGS

Figure 1 is a side view of a golf shaft constructed in accordance with an embodiment of the present invention.
Figure 1A is a cross sectional view of the golf shaft taken along lines 1A-1A of Figure 1.
Figure 1B is a cross sectional view of the golf shaft taken along lines 1B-1B of Figure 1.
Figure 1C is an isometric cut away view of a portion of the golf shaft shown in Figure 1.
Figure 2 is a side view of a golf shaft constructed in accordance with an alternative embodiment of the present invention.
Figure 2A is a longitudinal sectional view of a portion of the golf shaft taken along lines 2A-2A in Figure 2.
Figure 3 is an isometric view of a golf club assembled with the golf shaft constructed with a multiple tube design.
Figure 3A is a cross section of the golf shaft in Figure 3 taken along lines 3A-3A.
Figure 3B is a cross section of the golf shaft in Figure 3 taken along lines 3B-3B.
Figure 3C is an isometric cutaway view of a portion of the golf shaft shown in Figure 3.
Figure 4 shows an alternative example of how multiple ports could be oriented in a multiple tube construction
Figure 4A is a cross sectional view along the lines 4A-4A of Figure 4.
Figures 5A-5D show various shapes of ports.
Figures 6-7 are perspective views illustrating a process for forming a frame member of two different materials.
Figure 8 shows a cut away view of the tip portion of the golf shaft attached inside a golf club head.

The same reference numerals refer to the same parts throughout the various Figures.

### DETAILED DESCRIPTION OF THE INVENTION

As described below, the golf shaft is formed of two or more tubes which are molded together to form a common wall (or walls, in the case of more than two tubes). This common wall improves the torsional stiffness of the golf shaft by acting as a brace to resist twisting.

However, at selected locations, the facing surfaces of the tubes are kept apart during molding, to form openings. On either side of the openings, the tubes are joined together. The openings so formed are referred to herein as "ports." These ports are formed without drilling any holes or severing any reinforcement fibers.

The resulting structure is found to have superior performance characteristics for several reasons. The ports are in the shape of double opposing arches which allow the structure to deflect which deforms the ports, and return with more resiliency. The ports also allow greater bending flexibility than would traditionally be achieved in a single tube design. The internal wall between the hollow tubes adds strength to resist compressive buckling loads such as those near the hosel of the club head. Finally, the structure can also improve comfort by absorbing shock and damping vibrations due to the deformation of the ports.

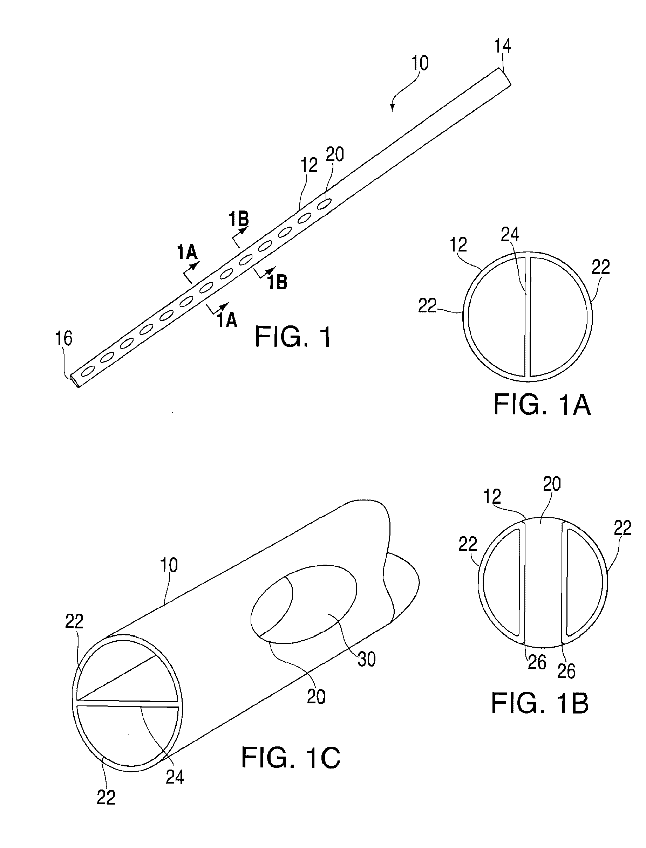

Figure 1 illustrates a golf shaft, which is referred to generally by the reference numeral 10. The golf shaft 10 includes a tapered portion 12 where the diameter of the shaft decreases between the butt end 14 and the tip end 16.

Figure 1 shows one preferred embodiment wherein the golf shaft 10 contains openings, or "ports" 20, oriented in line and with axes parallel to the direction of travel of the golf club head. Ports oriented in this manner provide a stiffer shaft to resist bending in the plane of the swing as the club is swung, and a more flexible shaft for bending out of the plane of the swing, or perpendicular to the direction of travel of the golf club head.

Figure 1A shows the two hollow tubes 22 which form the structure of the shaft in this embodiment. The hollow tubes 22 are joined together to form an internal wall 24. The preferred location of the internal wall 24 is near the neutral axis of the shaft. Both of the hollow tubes 22 should be about the same size and, when molded, form a "D" shape.

Figure 1B shows that, at the locations of the ports 20, the hollow tubes 22 are separated from one another to form the walls defining the ports 20. It is advisable to have a radius (i.e., rounded edges 26) leading into the port so to reduce the stress concentration and to facilitate the molding process.

Figure 1C is an isometric view of the golf shaft 10 isolated to one port which shows the two hollow tubes 22 and internal wall 24. Also shown is the port 20 formed by curved wall 30 which may have the shape of a portion of a cylinder. In this particular example, the axis of the port is 90 degrees to the axis of the tube.

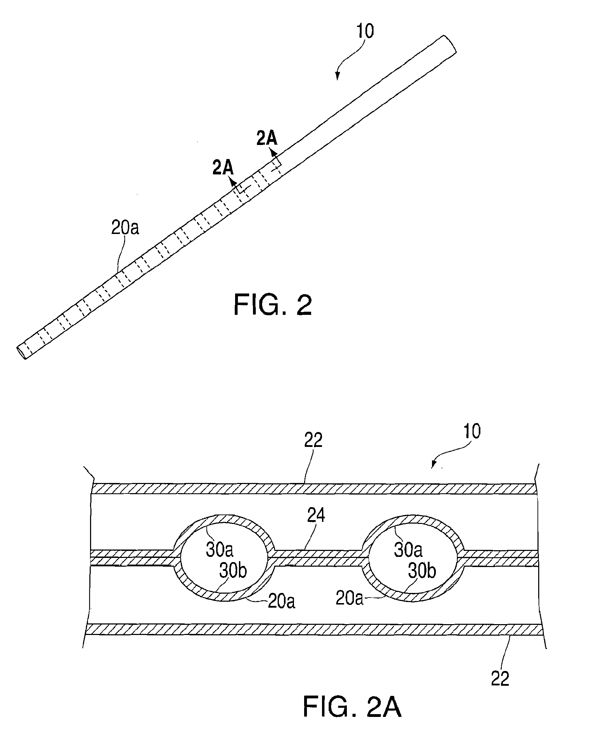

An alternative embodiment is to form ports 20a which are oriented so the axes are perpendicular to the direction of travel of the golf club head, as shown in Figure 2. Ports oriented in this manner provide the means to achieve more flexibility and resiliency of the golf shaft in the plane of the swing because the double arch structure can provide more bending flexibility in this direction due to the reduced shaft section dimension either side of the ports. In addition, as the shaft bends, the ports deform and return, providing a shaft of greater resiliency. Conversely, ports oriented in this manner will create a stiffer shaft for out of plane bending.

Figure 2A shows that, at locations other than the ports, the hollow tubes 22 are positioned side-by-side and are fused together along much of their lengths to form a common wall 24 that extends across the diameter of the shaft, i.e., bisects the shaft interior. At selected locations, e.g., where ports 20 are to be formed, the facing surfaces 30a and 30b of the tubes 22 are separated during molding to form apertures 20a in the shape of double opposing arches which act as geometric supports to allow deformation and return. In addition, the internal wall 24 provides structural reinforcement to resist deformations and buckling failures.

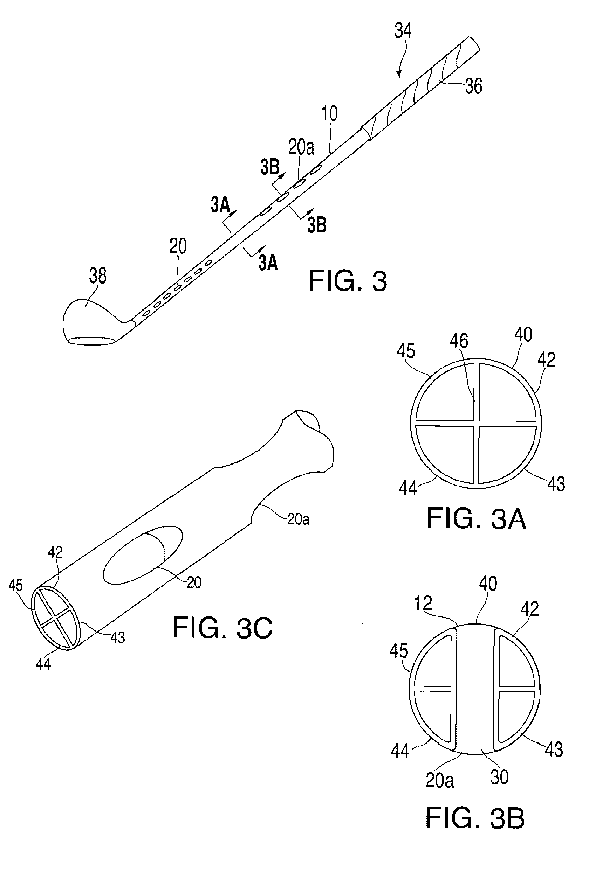

Figure 3 shows an alternative embodiment of the golf shaft as assembled into a golf club. The golf club 34 is comprised of a golf shaft 10 onto which is attached a grip 36 and a golf club head 38. In this case the golf shaft 10 is designed using a multiple tube construction with allows for ports 20 and ports 20a to be oriented at different angles.

In this particular example, the ports 20a near the tip of the shaft are in line with the direction of travel of the golf club head, in order to provide greater in plane stiffness in this area. The ports 20a near the grip end are oriented perpendicular to the direction of travel of the golf club head, which will provide improved in plane flexibility and resiliency. Therefore a golf shaft with this type of design would be considered to have a stiffer tip region and a more flexible upper shaft region. It is also possible to do the opposite or any combination desired.

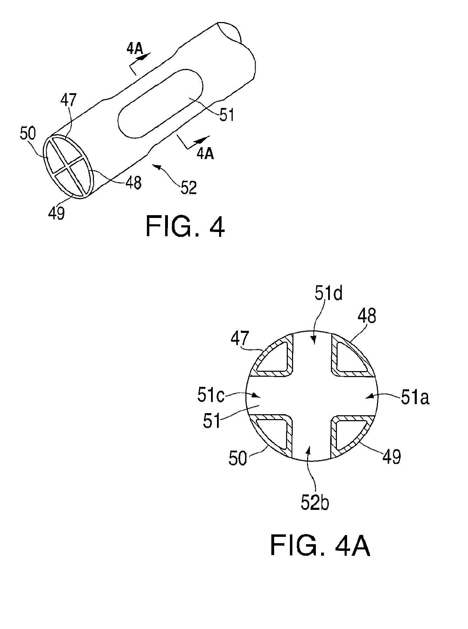

In the example of Figure 3A, 4 tubes (42,43,44,45) are used to create the tubular part with creates an internal wall 46 in the form of an "X".

The Figure 3B cross section is in the region of port 20a which is oriented perpendicular to the direction of travel of the golf club head 38. In this example the hollow tubes 42 and 43 have remained together as well as hollow tubes 44 and 45. The tubes 42 and 43 are separated from the tubes 44 and 45 during molding to create the port 20a.

Figure 3C is an isometric view of a cutaway portion of the shaft 10 of Figure 3 showing ports 20 oriented parallel to the direction of travel of golf club head 38, and ports 20a oriented perpendicular to the direction of travel of golf club head 38. As described above in connection with Figures 3A and 3B, ports may be formed by separating two tubes from the other two tubes. In this example, to form port 20, hollow tubes 42 and 45 have remained together as well as hollow tubes 43 and 44. To form port 20a, hollow tubes 42 and 43 have remained together as well as hollow tubes 44 and 45.

Figure 4 is an isometric cutaway view of a four tube structure 52 with ports for all tubes located in the same location. In this example, hollow tubes 47, 48, 49, and 50 are all separated in the same location to form four ports 51 there between.

Figure 4A is a cross sectional view of the tube structure 52 in Figure 4 taken along the lines 4A-4A. Here it can be seen that because all hollow tubes are separated, there results in an open port 51 that has four openings 51a-d. This particular embodiment would provide more flexibility and resiliency for both in plane and out of plane conditions at the same location.

In a multiple tube design, there can be any number of ports and orientations of ports depending on the number of hollow tubes used and how many are separated to form these ports. In addition, for example with a 3 tube design, the axis of the port would not necessarily have to pass through the center of the shaft.

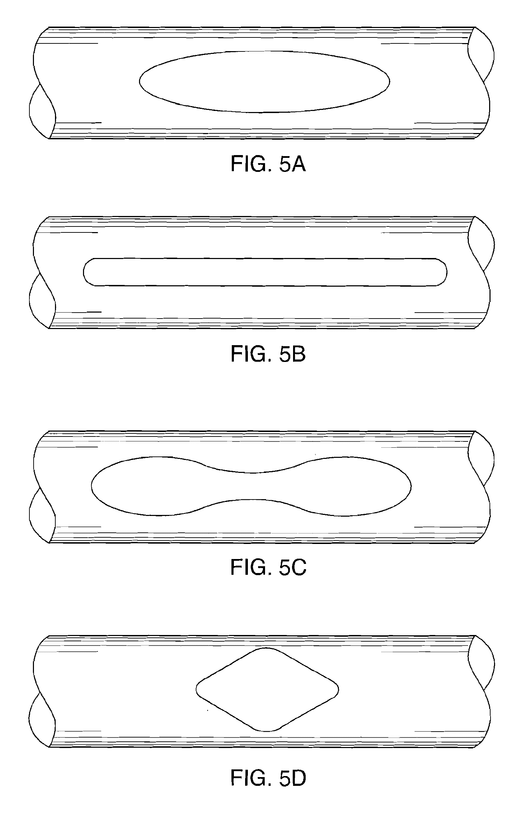

Figures 5A-5D illustrate some examples of the variety of shapes possible to be used for the ports. Depending on the performance required of the structure at a particular location, more decorative port shapes can be used.

In all orientations, the quantity, size, and spacing of the ports can vary according to the performance desired. In addition, the internal wall assists in resisting the stress induced by the hosel of the golf club. This is an excellent application of where a multiple tube construction such as using 4 tubes therefore creating 4 internal walls (see Figs. 3-4. described above) will better resist the circumferential stress.

The preferred embodiments of the present invention use multiple continuous composite tubes which are separated to form apertures in the form of double opposing arches at various locations in the golf shaft.

The single, hollow golf shaft has been the traditional way to design and manufacture composite golf shafts. This is because originally, the golf shaft was produced using single hollow metal tubes, so it was natural to replace these tubes with a single hollow composite tube.

It also makes sense from an efficiency viewpoint, that the single hollow tube maximizes properties of bending and twisting, since the material is displaced away from the central axis of the tube to maximize inertial properties. This has been the traditional golf shaft structure.

When a single hollow tube has a sufficient wall thickness, for example when weight is not critical, the design can sufficiently provide adequate stiffness and strength. However, as mentioned previously, when the wall thickness becomes thin relative to the diameter of the tube, the tubular part is susceptible to the wall buckling under the compressive forces which are always present in golf shaft.

In accordance with the present invention, conventional single hollow tubes forming the golf shaft are replaced with multiple tubes joined with an internal wall in between. The internal wall resists deformation of the cross section under loading which resists the buckling of the wall under compressive forces.

The invention allows the shaft to be custom tuned in terms of its stiffness and resiliency by varying, in addition to the geometry of the golf shaft itself, the size, number, orientation and spacing of the ports in the golf shaft.

The process of molding with composite materials facilitates the use of multiple tubes in a structure. The most common method of producing a composite golf shaft is to start with a raw material in sheet form known as "prepreg" which are reinforcing fibers impregnated with a thermoset resin such as epoxy. The resin is in a "B Stage" liquid form which can be readily cured with the application of heat and pressure. The fibers can be woven like a fabric, or unidirectional, and are of the variety of high performance reinforcement fibers such as carbon, aramid, glass, etc. The prepreg material commonly comes in a continuous roll or can be drum wound which produces shorter sheet length segments. The prepreg is cut at various angles to achieve the correct fiber orientation, and these strips are typically overlapped and positioned in a "lay-up" which allows them to be rolled up over a mandrel to form a perform. In order to pressurize and consolidate the prepreg plies, external pressure must be applied. This is commonly done by wrapping a polymer "shrink tape" around the exterior of the preform which will apply pressure upon the application of heat in a curing oven. The mandrel determines the internal geometry of the golf shaft. The thickness of the consolidated laminate plies determines the external geometry of the shaft.

The present invention will require a different molding technique because the use of multiple tubes and forming ports requires internal pressure to consolidate the prepreg plies. For example when molding the same golf shaft using two prepreg tubes, each tube should be approximately half the size of the single tube. A polymer bladder is inserted into the middle of each prepreg tube and is used to generate internal pressure to consolidate the plies upon the application of heat. The mold packing process consists of taking each prepreg tube and internal bladder and position into a mold cavity and an air fitting is attached to the bladder. The process is repeated for each tube depending on how many are used. Care should be taken for the position of each tube so that the internal wall formed between the tubes is oriented properly, and that pins can be inserted between the tubes in order to form the ports during pressurization. The pins are secured into portions of the mold and are easily removed.

The mold is pressed closed in a heated platen press and air pressure for each tube should be applied simultaneously to retain the size and position of each tube and the formed wall in between. Simultaneously, the tubes will form around the pins to form the ports. As the temperature rises in the mold, the viscosity of the epoxy resin decreases and the tubes expand, pressing against each other until expansion is complete and the epoxy resin is cross linked and cured. The mold is then opened, the pins removed, and the part is removed from the mold.

The internal wall of the molded tubular part adds significantly to improving the structural properties of the tubular part. The internal wall helps resist torsional deflections, resulting from off center hits, which will improve directional control. In addition, during bending or torsional deflection, the shape of the golf shaft is maintained much better, eliminating the tendency to buckle the cross section.

The orientation of the wall can be positioned to take advantage of the anisotropy it offers. If more bending flexibility is desired, the wall can be positioned along the neutral axis of bending. If greater stiffness is needed, then the wall can be positioned like an "I Beam" at 90 degrees to the neutral axis to greatly improve the bending stiffness.

Molding the tubular parts using multiple tubes allows greater design options. Separating the hollow tubes at selected axial locations along the shaft in order to mold large oval shaped openings between the tubes, allows the characteristics of the golf shaft to be varied as desired.

Molding in of apertures, or ports, at selected locations results in a double opposing arch construction. What is contributing to the structure, is the "double arch effect" of the ports, which are oval in shape creating two opposing arches which allow the tubular part to deflect, while retaining the cross sectional shape of the tube because of the three dimensional wall structure provided by the port. For example, a ported double tube structure has a combination of exterior walls, which are continuous and form the majority of the structure, and ported walls, which are oriented at an angle to the exterior walls, which provide strut like reinforcement to the tubular structure. The cylindrical walls of the ports prevent the cross section of the tube from collapsing, which significantly improves the strength of the structure.

The stiffness and resiliency of the ported double tube structure can be adjusted to be greater or less than a standard single hollow tube. This is because of the option of orienting the internal wall between the tubes as well as the size, shape, angle and location of the ports. The ports can be stiff if desired, or resilient allowing more deflection and recovery, or can be designed using different materials or a lay-up of different fiber angles in order to produce the desired performance characteristics of the structure.

The structure can be further refined by using more than two tubes. For example, using three tubes allows for apertures to occur in 120 degree offsets, providing specific stiffness tailoring along those directions. Using four tubes provides the possibility of having apertures at ninety degree angles to each other and alternately located along the length of the tubular part to achieve unique performance and aesthetic levels. Another option is to locate the multiple ports in the same location to achieve more of an open truss design.

Another option is to combine a single composite tube with a multiple tube composite design. In this example, the single composite tube can be a portion of the golf shaft and co-molded with the multiple tubes to produce a lower cost alternative to a 100 % multiple tube construction.

Another option is to combine the composite portion with a metal portion. In this example, the metal tube can be a portion of the golf shaft and fused or co-molded with the multiple prepreg tubes to produce a lower cost alternative to a 100 % carbon composite construction. This can produce a less expensive structure that can still achieve the performance and aesthetic requirements of the product.

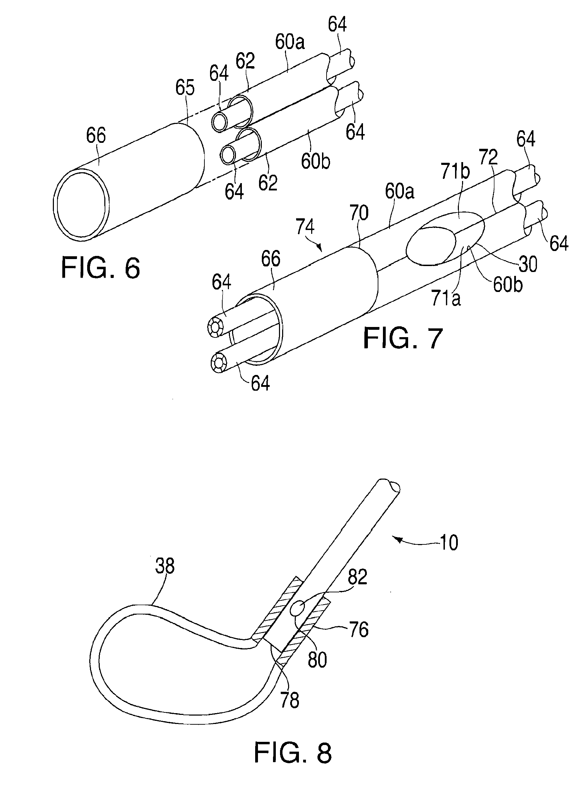

Referring to Figs. 6-7, in order to make this construction, the forward ends 62 of a pair of prepreg tubes 60a, 60b, each having an inflatable bladder 64, are inserted into one end 65 of a metal tube 66. The unit is placed inside a mold having the same shape of the metal tube 66, at least at the juncture 70 of the prepreg tubes 60a, 60b and the metal tube 66. A pin or mold member (not shown) is placed between the prepreg tubes 60a, 60b where a port 30 is to be formed. The mold is then closed and heated, as the bladders 64 are inflated, so that the prepreg tubes assume the shape of the mold, the mold member keeping the facing walls 71a, 71b apart so as to form the port 30. As shown, the tubes 60a, 60b will form a common wall at seam 72. After the prepreg tubes have cured, the frame member 74 is removed from the mold, and the mold member or pin is removed, leaving the port 30. In this embodiment, the seam 70 between the graphite portions 60a, 60b of the frame member 74 and the metal tube portion 66 should be flush.

Yet another option is to construct a double opposing arch structure using 100% metal materials. The preferred method to produce this structure is to start with a metal tube with a "D" shaped cross section. The tube can then be formed with a half arch bend along a portion of its length. A similar operation can be done with another metal tube. The two tube halves can then be attached by fixing the flat sides of the D shaped cross section so that the two half arches oppose each other. The tubes can be welded or bonded together resulting in a structure with an internal reinforcing wall and a double opposing arch shaped aperture.

An alternative method to produce a multiple tube structure out of metal is to start with a metal tube such as aluminum, titanium, steel, or magnesium for example, and deform the tube in local areas to create dimples or craters in the surface of the tube on opposing sides. The centers of these dimples can be removed leaving a circular aperture through the tube. A tubular section can then be positioned through these circular apertures and fixed to the edges of this dimple area of the primary tube using a welding process to create the 3D structure. The result will be a structure with the primary tube being a single hollow tube with other single hollow tubes attached in a transverse manner internal to the primary tube.

The ported double tube construction can also provide more comfort to the golfer. As mentioned previously, the stiffness of the tubular part can be optimized to provide greater flexibility if desired. For example the ports oriented at 90 degrees to the direction of travel to provide a more flexible shaft for enhanced golfer comfort.

Another advantage of the invention is the absorption of the shock wave traveling up axis of the shaft. This can occur when striking the hard ground for example. Having ports along the length of the shaft which can deform and absorb this force will be a first for the golf industry.

Yet another advantage of the invention is vibration damping. Vibrations are damped more effectively with the opposing double arch construction. This is because the movement and displacement of the arches absorbs energy which damps vibrations. As the tubular parts deflect, the shape of the ports can change, allowing a relative movement between the portions of the tube either side of the port. This movement absorbs energy which damps vibrations.

Finally, there is a very distinguished appearance to a golf shaft made according to the invention. The ports are very visible, and give the tubular part a very light weight look, which is important in golf marketing. The ports can also be painted a different color, to further enhance the signature look of the technology.

There are unlimited combinations of options when considering a double opposing arch structure. The ports can vary by shape, size, location, orientation and quantity. The ports can be used to enhance stiffness, resilience, strength, comfort and aesthetics. For example in a low stress region, the size of the port can be very large to maximize its effect and appearance. If more deflection or resilience is desired, the shape of the aperture can be very long and narrow to allow more flexibility. The ports may also use designer shapes to give the product a stronger appeal.

If more vibration damping is desired, the ports can be oriented and shaped at a particular angle, and constructed using fibers such as aramid or liquid crystal polymer. As the port deforms as a result of shaft deflection, its return to shape can be controlled with these viscoelastic materials which will increase vibration damping. Another way to increase vibration damping is to insert an elastomeric material inside the port.

Another advantage of the invention could be to facilitate the attachment to the golf club head. Having a port at the tip portion of the shaft that is inserted into the hosel of the golf club provides a mechanical means of attachment to the golf club head to better secure the shaft. Figure 8 shows such an example with the golf shaft 10 inserted into the hosel 76 of the golf club head 38. The tip 78 of shaft 10 has a port 80 into which a pin 82 is inserted. The pin 82 is also attached to the hosel 76 to provide a secure attachment means. This arrangement could also provide a portable means to attach golf shafts to golf club heads without the traditional and permanent methods of using adhesives.

With respect to the above description then, it is to be realized that the optimum dimensional relationships for the parts of the invention, to include variations in size, materials, shape, form, function and manner of operation, assembly and use, are deemed readily apparent and obvious to one skilled in the art, and all equivalent relationships to those illustrated in the drawings and described in the specification are intended to be encompassed by the present invention.

Therefore, the foregoing is considered as illustrative only of the principles of the invention. Further, since numerous modifications and changes will readily occur to those skilled in the art, it is not desired to limit the invention to the exact construction and operation shown and described, and accordingly, all suitable modifications and equivalents may be resorted to, falling within the scope of the invention.

## Claims

**1.** A golf shaft formed of at least two hollow tubes, said tubes being formed of composite material;
wherein said shaft has a longitudinal axis and a diameter which varies along said axis;
wherein first portions of said tubes form an outer wall of said shaft and define a shaft interior; and
wherein second portions of said tubes extend across the interior of said shaft and are bonded to one another, at least along much of the length of said shaft, thereby to form an internal reinforcing wall.

**2.** A golf shaft as defined in claim 1, wherein said shaft is formed of a double tube construction.

**3.** A golf shaft as defined in claim 1, wherein said shaft is formed of a triple tube construction.

**4.** A golf shaft as defined in claim 1, wherein said shaft is formed of four tubes.

**5.** A golf shaft formed of at least two hollow tubes, said tubes formed of composite material;
wherein said shaft has a longitudinal axis; wherein first portions of said tubes form an outer wall of said shaft and define a shaft interior; wherein second portions of said tubes extend across the interior of said shaft and are bonded to one another along much of the length of said shaft, thereby to form an internal reinforcing wall; and wherein said second portions are separated from one another at at least one axial location so as to form at least one port.

**6.** A golf shaft as defined in claim 5, wherein said at least one port has a double opposing arch structure.

**7.** A golf shaft as defined in claim 6, wherein said shaft has multiple double opposing arch shaped ports.

**8.** A golf shaft as defined in claim 5, wherein said second portions are separated from one another at selected locations to form multiple ports.

**9.** A golf shaft as defined in claim 5, wherein said ports have an axis therethrough, and
wherein at least two of said ports have different axial orientations.

**10.** A golf shaft as defined in claim 5, wherein said shaft includes ports which vary in size.

**11.** A golf shaft as defined in claim 5, wherein said shaft includes at least three ports, wherein each port has a central axis therethrough, and wherein the axes of said ports are spaced apart from one another by at least two distances.

**12.** A golf shaft as defined in claim 1, wherein one or more tubes are added to a single tube structure in a local area.

**13.** A golf shaft as defined in claim 1, wherein the shaft comprises a metal tube for a portion of its length.

**14.** A golf shaft as defined in claim 1, wherein at least a portion comprises a single metal tube joined to a multi-tube member.

**15.** A golf shaft as defined in claim 14, wherein said multi-tube member includes a port.

**16.** A golf shaft component which is metal and produced using a multiple tube construction in which the tubes have facing surfaces which are bonded to one another along at least much of their lengths.

**17.** A golf club with a golf shaft formed of at least two hollow tubes, said tubes being formed of composite material;
wherein said shaft has a longitudinal axis and a diameter which varies along said axis;
wherein first portions of said tubes form an outer wall of said shaft and define a shaft interior; and
wherein second portions of said tubes extend across the interior of said shaft and are bonded to one another, at least along much of the length of said shaft, thereby to form an internal reinforcing wall.

**18.** A golf club as defined in claim 17, wherein said shaft is formed of a double tube construction.

**19.** A golf club with a golf shaft formed of at least two hollow tubes, said tubes formed of composite material; wherein said shaft has a longitudinal axis; wherein first portions of said tubes form an outer wall of said shaft and define a shaft interior; wherein second portions of said tubes extend across the interior of said shaft and are bonded to one another along much of the length of said shaft, thereby to form an internal reinforcing wall; and wherein said second portions are separated from one another at at least one axial location so as to form at least one port.

**20.** A golf club with a golf shaft as defined in claim 6.

**21.** A golf club with a golf shaft as defined in claim 7.

**22.** A golf club with a golf shaft as defined in claim 8.

**23.** A golf club with a golf shaft as defined in claim 9.

**24.** A golf club with a golf shaft as defined in claim 10.

**25.** A golf club with a golf shaft as defined in claim 11.

**26.** A golf club with a golf shaft as defined in claim 12.

**27.** A golf club with a golf shaft as defined in claim 13.

**28.** A golf club with a golf shaft as defined in claim 14.

**29.** A golf club with a golf shaft component which is metal and produced using a multiple tube construction in which the tubes have facing surfaces which are bonded to one another along at least much of their lengths.

**27.** A golf club having a head and having a golf shaft as defined in claim 5, wherein said shaft has a port located within the club head which is used to attach said shaft to said head.
